# EUROPÄISCHE PATENTSCHRIFT

(11) **EP 2 362 323 B1**
(45) Veröffentlichungstag und Bekanntmachung des Hinweises auf die Patenterteilung: **11.02.2015**
(21) Anmeldenummer: 11156043.9
(22) Anmeldetag: 25.02.2011
(51) Int. Cl.: H04L 12/66, H04L 12/24, H04L 12/771

(54) **Verfahren und Gateway zum Vermitteln von Datenpaketen**
Method and gateway for conveying data packets
Procédé et passerelle destinés à la transmission de paquets de données

(30) Priorität: 26.02.2010 DE 102010009541; 21.05.2010 DE 102010022187
(43) Veröffentlichungstag der Anmeldung: 31.08.2011
(73) Patentinhaber: Insys Microelectronics GmbH, 93049 Regensburg (DE)
(72) Erfinder: Heider, Markus, 93133 Burglengenfeld (DE); Gallenberger, Stefan, 93049 Regensburg (DE); Kress, Michael, 93047 Regensburg (DE); Tomahogh, Christian, 93057 Regensburg (DE)
(74) Vertreter: Hannke, Christian

(56) Entgegenhaltungen:
- US-A1- 2005 047 326
- US-A1- 2009 003 375
- US-B1- 7 415 512

## Beschreibung

Die Erfindung betrifft ein Gateway, insbesondere einen Router, zum Vermitteln von Datenpaketen, gemäß dem Oberbegriff des Hauptanspruches 1.

Der Einsatz von Kommunikationsgeräten zur Datenübertragung ist in vielfältiger Weise bekannt. Beispielsweise findet eine derartige Datenübertragung Anwendung in verschiedensten Bereichen der Industrie, im Anlagenbau, in der Automatisierungstechnik, in der Gebäudeautomatisation, in der Energietechnik gemäß Smart Grid, Smart Metering und Elektromobilität etc., in verschiedensten Bereichen des Infrastrukturaufbaus, wie der Wasserver- oder entsorgung, bei Bezahlsystemen oder bei medizintechnischen Geräten, die eine Datenübertragung beispielsweise zu einem zentralen Server erfordern.

Derartige Router sind Kommunikationsgeräte und können als technische Einrichtung zu Vermittlungszwecken in Netzknoten von paketvermittelnden Netzen verwendet werden, sind des Öfteren mit vorzugsweise proprietären Betriebssystemen ausgestattet und werden hierdurch zu embedded Kommunikationsgeräten. Ein solcher Router ist aus US 2009/0003375 bekannt.

Obgleich auf derartigen embedded Kommunikationsgeräten aufgrund des Vorhandenseins eines vorinstallierten Betriebssystems von einem Nutzer Programme ausgeführt werden können, können hierbei bisher die von dem Gerätehersteller zur Verfügung gestellten Kommunikationsfunktionen sofern überhaupt vorhanden nur wenig gesteuert und konfiguriert und somit genutzt werden. Derartige Kommunikationsfunktionen, wie beispielsweise für die Auswahl und das Testen von Software, die Programmierung von grundlegenden Kommunikationsfunktionen und dergleichen mussten, sofern sie genutzt werden sollten, bisher von dem Nutzer bzw. dem Geräteanwender für das jeweilige Anwendungsprogramm bzw. die Applikation angepasst werden oder komplett neu erstellt werden.

Demzufolge ist es ein Ziel der vorliegenden Erfindung, einen Router zur Verfügung zu stellen, der die Anwendung von Anwendungsprogrammen unter Zuhilfenahme eines dem Kommunikationsgerät zur Verfügung stehenden Betriebssystems auch unter Verwendung der von dem Gerätehersteller zur Verfügung gestellten Kommunikationsfunktionen ermöglicht.

Die zuvor genannte Aufgabe wird erfindungsgemäß durch ein Gateway zum Vermitteln von Datenpaketen, mindestens umfassend eine Steuereinrichtung zum Bereitstellen und/oder Steuern von mindestens einer Grundfunktionalität des Gateways, mindestens eine Datenschnittstelle zum Austausch der Datenpakete und mindestens eine Informationsbereitstellungseinrichtung zum Bereitstellen von für ein Zusammenwirken der Steuereinrichtung und der Datenschnittstelle zumindest zeitweise relevanten Steuerinformationen nach Anspruch 1 gelöst. Dabei sind die Steuereinrichtung und die Informationsbereitstellungseinrichtung mindestens über eine erste und eine zweite Schnittstelle mit mindestens einer durch den Anwender konfigurierbaren Modifiziereinrichtung, insbesondere einer Sandbox, zum Modifizieren der Kommunikation mit der Datenschnittstelle verbunden.

Ein Gateway dient bevorzugt zur Kopplung von zwei oder mehreren gleichartigen oder verschiedenen Netzen (Netz im Sinne der Kommunikationstechnik). Dabei kann die Kopplung auf Datenebene transparent (z.B. durch Routing) erfolgen oder unter Nutzung von Datenverarbeitungsmechanismen auf dem Gateway.

Ein wesentlicher Punkt der Erfindung liegt somit darin, dass ein System zur Nutzung eines embedded Kommunikationsgerätes für die Ausführung von anwendereigenen Programmen unter Beibehaltung und Nutzung der vom Gerätehersteller mitgelieferter Kommunikationsfunktionen, eine als Sandbox ausgebildete zur Abkapslung einer Software geeigneten Einrichtung, die auch als Modifiziereinrichtung bezeichnet sein kann, verwendet wird, in der Anwender- bzw. Nutzerprogramme unter einfachem und schnellem Zugriff auf die Kommunikationsfunktionen angewendet werden.

Somit ist eine bevorzugte Ausführungsform der vorliegenden Erfindung dadurch gegeben, dass mit der Modifiziereinrichtung anwenderbezogene Funktionen ausführbar sind.

Hierfür ist es möglich, mittels einer Steuereinrichtung und/oder einer Konfigurationseinrichtung die genannten Kommunikationsfunktionen schnell zu konfigurieren und zu steuern, um eine Anpassung an das von dem Nutzer genutzte Nutzungsprogramm zu ermöglichen.

Die Kommunikationsfunktionen des Geräteherstellers richten sich bei dem Kommunikationsgerät bevorzugt vorrangig auf Datenübertragungsfunktionalitäten, auf die zugegriffen wird, wenn in der Sandbox das Nutzerprogramm bzw. das anwendereigene Programm geladen und ausgeführt wird.

Gemäß einer weiteren bevorzugten Ausführungsform der vorliegenden Erfindung ist eine anwenderbezogene Funktion zumindest zeitweise das anwenderbezogene Steuern der Datenschnittstelle, die anwenderbezogene Kommunikation über die Datenschnittstelle mit weiteren Vorrichtungen und/oder die anwenderbezogene Kommunikation mit mindestens einer Datenbereitstellungseinrichtung der Informationsbereitstellungseinrichtung, wobei dies bevorzugt über die zweite Schnittstelle erfolgt.

Für einen Zugriff auf die Kommunikationsfunktionen des Geräteherstellers besteht eine Schnittstelle, bevorzugt die zweite Schnittstelle, zwischen der Sandbox, in der das anwendereigene Programm oder mehrere anwendereigene Programme geladen sind, und den verschiedenen Kommunikationsfunktionalitäten, die auch als verschiedene Datenbereitstellungseinrichtungen bezeichnet werden können.

In einer weiteren bevorzugten Ausführungsform der vorliegenden Erfindung ist mindestens eine Datenbereitstellungseinrichtung eine Einrichtung ausgewählt aus der Gruppe zumindest bestehend aus einer Konfigurationsdatenbereitstellungseinrichtung zum Bereitstellen von Konfigurationsdaten der vom Gerätehersteller aufgebrachten Herstellerfunktionalität, einer Betriebsdatenbereitstellungseinrichtung zum Bereitstellen von Betriebsdaten der von dem Gerätehersteller aufgebrachten Herstellerfunktionalität, einer Funktionalitätssteuereinrichtung zum Steuern der von dem Gerätehersteller aufgebrachten Herstellerfunktionalität bzw. der Grundfunktionalität des Routers, wobei diese Grundfunktionalität beispielsweise das Versenden von Datenpaketen, wie z.B. in der Form von SMS, MMS oder E-Mails sein kann, einer Konfigurationseinrichtung mit den vom Gerätehersteller aufgebrachten Konfigurationen der Ressourcen- und Rechteeinstellungen für die Modifiziereinrichtung bzw. für die in der Sandbox laufenden und abgespeicherten Programme, wobei hierbei der Zugriff lesend und schreibend jedoch bevorzugt lediglich lesend erfolgt, ähnlichem und/oder Kombinationen daraus.

Bei den anderen zuvor genannten Einrichtungen kann der Zugriff bzw. Datenaustausch bevorzugt sowohl schreibend als auch lesend, also in beide Richtungen erfolgen, wobei auch denkbar ist, dass der Zugriff lediglich nur lesend bzw. nur schreibend erfolgt.

In einer weiteren bevorzugten Ausführungsform der vorliegenden Erfindung sind Daten zum Ausführen anwenderbezogener Funktionen, im Zugriffsbereich der Modifiziereinrichtung abspeicherbar. Wobei die Daten bevorzugt anwenderbezogenen oder funktionsbezogenen Konfigurations- und/oder Betriebsdaten sind, die besonders bevorzugt mittels einer Updatefunktion in die Modifiziereinrichtung einspielbar und/oder darin installierbar sind.

Diese Ausführungsform ist vorteilhaft, da durch die Modifiziereinrichtung Daten, die bevorzugt zum Betrieb des Routers verwendet werden, verwaltet, insbesondere erzeugt, gelöscht oder geändert werden können. Dies ermöglicht beispielsweise eine ständige Anpassung des Routers an veränderte Randbedingungen.

In einer weiteren bevorzugten Ausführungsform der vorliegenden Erfindung sind die Updatefunktion, eine Authentifizierungsfunktion und/oder eine Freischaltfunktion zum Authentifizieren und/oder Freischalten der anwenderbezogenen Konfigurations- und/oder Betriebsdaten durch die Informationsbereitstellungseinrichtung bzw. einzelne im Zugriffsbereich der Informationsbereitstellungseinrichtung vorgesehenen Einrichtungen bereitstellbar. Das Updaten der Konfigurations- und Betriebsdaten kann hierbei manuell oder automatisch gestartet werden. Dies führt ebenfalls dazu, dass der Router an veränderte bzw. sich verändernde Randbedingungen oder Einsatzbedingungen angepasst werden kann.

In einer weiteren bevorzugten Ausführungsform der vorliegenden Erfindung weist die Modifiziereinrichtung zumindest zeitweise mindestens ein Funktionsmittel zum Ausführen der anwenderbezogenen Funktion auf, das im Zugriffsbereich der Modifiziereinrichtung abspeicherbar ist. Wobei das Funktionsmittel bevorzugt das bzw. die Anwender- oder Nutzerprogramme repräsentiert oder ist.

Die Erfindung ist ebenfalls auf ein Verfahren zum Vermitteln von Datenpaketen gerichtet, wobei mit einer Steuereinrichtung mindestens eine Grundfunktionalität eines Routers bereitgestellt und/oder gesteuert wird, mit mindestens einer Datenschnittstelle Datenpakete ausgetauscht werden und mit mindestens einer Informationsbereitstellungseinrichtung zumindest zeitweise relevanten Steuerinformationen für ein Zusammenwirken der Steuereinrichtung und der Datenschnittstelle bereitgestellt werden und die Steuereinrichtung und die Informationsbereitstellungseinrichtung mindestens über eine erste und eine zweite Schnittstelle mit mindestens einer durch den Anwender konfigurierbaren Modifiziereinrichtung, insbesondere einer Sandbox, zum Modifizieren der Kommunikation mit der Datenschnittstelle verbunden sind.

Diese Ausführungsform ist vorteilhaft, da durch das Funktionsmittel anwenderbezogene Funktionen unter Verwendung der vom Hersteller bereitgestellten Ressourcen ausgeführt werden können.

In der bevorzugten Ausführungsform der vorliegenden Erfindung ist ein Zugriff der Steuereinrichtung und/oder der Informationsbereitstellungseinrichtung auf die Modifiziereinrichtung, das Funktionsmittel oder auf durch die Modifiziereinrichtung erzeugten und/oder verwalteten Daten verhinderbar.

Dies ist vorteilhaft, da die anwenderbezogenen Daten, Informationen, Funktionen, Befehle, Programme, Einrichtungen und/oder ähnliches nicht ungewollt durch die Steuereinrichtung und/oder die Informationsbereitstellungseinrichtung veränderbar sind.

Weitere Vorteile, Ziele und Eigenschaften vorliegender Erfindung werden anhand nachfolgender Beschreibung anliegender Zeichnung erläutert, in welcher beispielhaft ein Router zum Vermitteln von Datenpaketen dargestellt ist.

Darin zeigt:

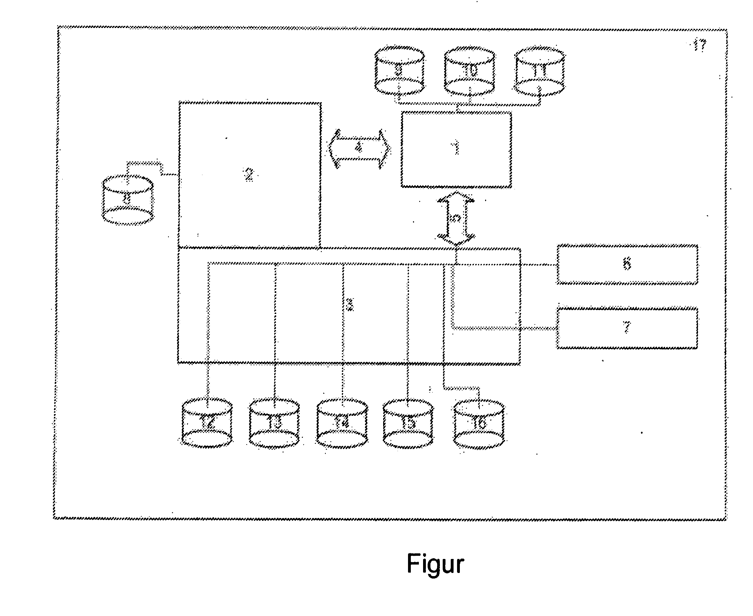

- Fig. 1: ein Gateway, der neben einer Steuereinrichtung und einer Informationsbereitstellungseinrichtung eine Sandbox aufweist.

Unter Bezugnahme auf das in der Figur dargestellte System ist eine Sandbox 1 bzw. eine Modifiziereinrichtung 1 mittels einer ersten Schnittstelle 4 mit einer ein Betriebssystem enthaltenden Einrichtung, insbesondere einer Steuereinrichtung 2, verbunden und über eine weitere bereits oben beschriebene zweite Schnittstelle 5 mit einer Einrichtung, insbesondere einer Informationsbereitstellungseinrichtung 3, für die Herstellerfunktionalität 14, der Einrichtung 12 mit den Konfigurationsdaten der vom Gerätehersteller aufgebrachten Herstellerfunktionalität, der Einrichtung 13 mit den Betriebsdaten der vom Gerätehersteller aufgebrachten Herstellerfunktionalität und der Einrichtung 15 mit den von dem Gerätehersteller aufgebrachten Konfigurationen der Ressourcen- und Rechteeinstellungen dargestellt. Wobei die mit dem Bezugszeichen 12 versehene Einrichtung auch als Konfigurationsdatenbereitstellungseinrichtung, die mit dem Bezugszeichen 13 versehene Einrichtung auch als Betriebsdatenbereitstellungseinrichtung, die mit dem Bezugszeichen 14 versehen Einrichtung auch als Funktionalitätssteuereinrichtung und die mit dem Bezugszeichen 15 versehene Einrichtung als Konfigurationseinrichtung bezeichnet werden kann. Die erste und zweite Schnittstelle 4, 5 dienen bevorzugt zum Übertragen von Informationsdaten, Signalen, Datenpaketen, ähnlichem und/oder Kombinationen daraus.

Es können ferner eine oder mehrere Datenschnittstellen 6, 7 vorgesehen sein, wobei jede der Datenschnittstellen als lokale Datenschnittstelle 6 oder Weiterverkehrsdatenschnittstelle 7 ausgeführt sein kann. Bevorzugt sind jedoch mindestens eine lokale Datenschnittstelle 6 und mindestens eine Weiterverkehrsdatenschnittstelle 7 ausgebildet. Eine Weiterverkehrsdatenschnittstelle 7 und eine lokale Datenschnittstelle 6 dienen dazu, dass das Anwender- bzw. Nutzerprogramm über diese Schnittstellen Daten sowohl schreibend als auch lesend übertragen kann. Hierbei kann die Weiterverkehrsdatenschnittstelle unterschiedliche Übertragungsmedien bzw. Protokolle anwenden bzw. unterstützen, wie beispielsweise Ethernet, Mobilfunkmedien mittels GSM-, GPRS-, UMTS-, und LTE-Netz, Wimax, PSTN, ISDN, SDSL, ADSL, Glasfaseroptik und dergleichen Datenübertragungsstandards.

Die lokale Datenschnittstelle ist derart ausgebildet, dass sie ebenso unterschiedliche Übertragungsmedien bzw. Protokolle, wie beispielsweise basierend auf Ethernet, RS232, RS485, CL, Modbus, USB, weitere zeitgemäße Datenübertragungsschnittstellen sowie generische Signaleingänge, wie beispielsweise ein digitaler oder analoger Eingang sowie generische Signalausgänge, wie beispielsweise ein digitaler und analoger Ausgang, anwenden bzw. unterstützen kann.

Als Nutzerprogramme bzw. anwendereigene Programme oder Funktionsmittel 11 können sowohl nativ ausführbare Codes als auch Shellskripte oder andere Formen von Skripten, die in einer Laufzeitumgebung laufen, angewendet werden. Hierbei kann die Laufzeitumgebung innerhalb der Sandbox 1 durch den Anwender installierbar sein.

Neben dem anwendereigenen Programm 11 können auch anwendereigene Daten, wie anwendereigene Konfigurations- und Betriebsdaten 9, 10, in der Sandbox 1 gespeichert und angewendet werden. Hierbei sind sowohl das anwendereigene Programm 11 als auch die anwendereigenen Daten 9, 10 weiterhin in der Sandbox 1 als solches nach einem erfolgten Software-Update der Hersteller-Kommunikationsfunktionen bzw. der Informationsbereitstellungseinrichtung 3 gegeben.

Weiterhin können mittels eines Updates die anwendereigenen Konfigurations- und Betriebsdaten 9, 10 sowie das anwendereigene Programm 11 in der Sandbox 1 eingespielt und somit installiert werden, wobei das Updateprogramm von der Gerätehersteller-Kommunikationsfunktionalität gemäß Bezugszeichen 3 zur Verfügung gestellt werden kann.

Ebenso kann eine Einrichtung 3, 14 oder eine weitere Einrichtung 16 zum Authentifizieren und Freischalten vorgesehen sein, die das anwendereigene Programm sowie die anwendereigenen Konfigurations- und Betriebsdaten 9, 10 vor dem Installieren und Laden authentifiziert und freischaltet, wobei diese Einrichtung bevorzugt der Gerätehersteller-Kommunikationsfunktionalität 3 zuzuordnen ist.

Ebenso kann eine derartige Einrichtung 3, 14, 16 zur Authentifizierung und Freischaltung durch den Gerätehersteller oder durch eine weitere vom Anwender unabhängige Vorrichtung zur Verfügung gestellt werden, wie beispielsweise durch einen Gerätebetreiber.

Mittels einer weiteren Einrichtung 9 wird ermöglicht, dass das anwendereigene Programm 11 innerhalb der Sandbox 1 auch eigene Konfigurationsdaten verwenden und verwalten kann.

Noch eine weitere Einrichtung 10 kann eigene Betriebsdaten des anwendereigenen Programms 11 in die Sandbox 1 einspielen und von dem anwendereigenen Programm 11 verwalten lassen.

Sowohl die Einrichtung 9 für die Zurverfügungstellung von Konfigurationsdaten als auch die Einrichtung 10 für die Zurverfügungstellung von Betriebsdaten des anwendereigenen Programms sowie die Einrichtung 11 für das Zurverfügungstellen des anwendereigenen Programms selbst sind bevorzugt mittels einer Schutzeinrichtung vor dem Zugriff durch herstellereigene Kommunikationsfunktionalitäten gemäß Bezugszeichen 3 und 14 geschützt.

Mittels der weiteren Schnittstelle 4 ist ein direkter Zugriff auf zumindest Teile einer Einrichtung 2 zur Speicherung und Anwendung eines damit verbundenen Betriebssystems 8 gegeben. Der Zugriff kann sowohl schreibend als auch lesend erfolgen.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Modifiziereinrichtung
- 2: Steuereinrichtung
- 3: Informationsbereitstellungseinrichtung
- 4: Erste Schnittstelle
- 5: Zweite Schnittstelle
- 6: Erste Datenschnittstelle
- 7: Zweite Datenschnittstelle
- 8: Betriebsdaten des Betriebssystems
- 9: Konfigurationsdaten
- 10: Betriebsdaten
- 11: Funktionsmittel
- 12: Konfigurationsdatenbereitstellungseinrichtung
- 13: Betriebsdatenbereitstellungseinrichtung
- 14: Funktionalitätssteuereinrichtung
- 15: Konfigurationseinrichtung
- 16: Weitere Einrichtung
- 17: Gateway

## Patentansprüche

1. Gateway (17) zum Vermitteln von Datenpaketen, mindestens umfassend eine Steuereinrichtung (2) zum Bereitstellen und/oder Steuern von mindestens einer Grundfunktionalität des Gateways (17), mindestens eine Datenschnittstelle (6, 7) zum Austausch der Datenpakete und mindestens eine Informationsbereitstellungseinrichtung (3, 14) zum Bereitstellen von für ein Zusammenwirken der Steuereinrichtung (2) und der Datenschnittstelle (6, 7) zumindest zeitweise relevanten Steuerinformationen, wobei die Steuereinrichtung (2) und die Informationsbereitstellungseinrichtung (3, 14) mindestens über eine erste und-eine zweite Schnittstelle (4, 5) mit mindestens einer durch den Anwender konfigurierbaren Modifiziereinrichtung (1), insbesondere einer Sandbox, zum Modifizieren der Kommunikation mit der Datenschnittstelle (6, 7) verbunden sind, wobei mittels einer Updatefunktion, welche durch die Informationsbereitstellungseinrichtung (3) bereitstellbar ist, anwenderbezogene Konfigurations- und Betriebsdaten in die Modifiziereinrichtung (1) einspielbar und/oder darin installierbar sind **dadurch gekennzeichnet, dass** ein Zugriff der Steuereinrichtung (2) und/oder der Informationsbereitstellungseinrichtung (3, 14) auf die Modifiziereinrichtung (1) oder auf durch die Modifiziereinrichtung erzeugte und/oder verwaltete Daten (9, 10) verhindert ist.

2. Gateway nach Anspruch 1,
**dadurch gekennzeichnet, dass**
mit der Modifiziereinrichtung (1) anwenderbezogene Funktionen ausführbar sind.

3. Gateway nach Anspruch 2,
**dadurch gekennzeichnet, dass**
eine anwenderbezogene Funktion zumindest zeitweise das anwenderbezogene Steuern der Datenschnittstelle (6, 7), die anwenderbezogene Kommunikation über die Datenschnittstelle (6, 7) mit weiteren Vorrichtungen und/oder die anwenderbezogene Kommunikation mit mindestens einer Datenbereitstellungseinrichtung (12, 13, 14, 15) der Informationsbereitstellungseinrichtung (3) ist.

4. Gateway nach Anspruch 3,
**dadurch gekennzeichnet, dass**
mindestens eine Datenbereitstellungseinrichtung (12, 13, 14, 15) eine Einrichtung ausgewählt aus der Gruppe zumindest bestehend aus einer Konfigurationsdatenbereitstellungseinrichtung (12) zum Bereitstellen von Konfigurationsdaten der vom Gerätehersteller aufgebrachten Herstellerfunktionalität, einer Betriebsdatenbereitstellungseinrichtung (13) zum Bereitstellen von Betriebsdaten der von dem Gerätehersteller aufgebrachten Herstellerfunktionalität, einer Funktionalitätssteuereinrichtung (14) zum Steuern der von dem Gerätehersteller aufgebrachten Herstellerfunktionalität, einer Konfigurationseinrichtung (15) mit den vom Gerätehersteller aufgebrachten Konfigurationen der Ressourcen- und Rechteeinstellungen für die Modifiziereinrichtung (1)und/oder Kombinationen daraus ist.

5. Gateway nach einem der Ansprüche 2 bis 4,
**dadurch gekennzeichnet, dass**
zum Ausführen anwenderbezogener Funktionen Daten (9, 10) in einem Zugriffsbereich der Modifiziereinrichtung (1) abspeicherbar sind.

6. Gateway nach Anspruch 5,
**dadurch gekennzeichnet, dass**
die Daten (9, 10) anwenderbezogene oder funktionsbezogene Konfigurationsdaten (9) und/oder Betriebsdaten (10) sind.

7. Gateway nach einem der vorangegangenen Ansprüche,
**dadurch gekennzeichnet, dass**
eine Authentifizierungsfunktion und/oder eine Freischaltfunktion zum Authentifizieren und/oder Freischalten der anwenderbezogenen Konfigurations- und/oder Betriebsdaten durch die Informationsbereitstellungseinrichtung (3) bereitstellbar ist/sind.

8. Gateway nach einem der vorangegangenen Ansprüche,
**dadurch gekennzeichnet, dass**
die Modifiziereinrichtung (1) zumindest zeitweise mindestens ein Funktionsmittel (11) zum Ausführen einer anwenderbezogenen Funktion aufweist, das in einem Zugriffsbereich der Modifiziereinrichtung (1) abspeicherbar ist.

9. Gateway nach Anspruch 8,
**dadurch gekennzeichnet, dass**
ein Zugriff der Steuereinrichtung (2) und/oder der Informationsbereitstellungseinrichtung (3, 14) auf das Funktionsmittel (11) verhinderbar ist.

10. Verfahren zum Vermitteln von Datenpaketen, wobei mit einer Steuereinrichtung (2) mindestens eine Grundfunktionalität eines Gateways (17) bereitgestellt und/oder gesteuert wird, mit mindestens einer Datenschnittstelle (6, 7) Datenpakete ausgetauscht werden und mit mindestens einer Informationsbereitstellungseinrichtung (3, 14) zumindest zeitweise relevante Steuerinformationen für ein Zusammenwirken der Steuereinrichtung (2) und der Datenschnittstelle (6, 7) bereitgestellt werden, wobei die Steuereinrichtung (2) und die Informationsbereitstellungseinrichtung (3, 14) mindestens über eine erste und eine zweite Schnittstelle (4, 5) mit mindestens einer durch den Anwender konfigurierbaren Modifiziereinrichtung (1), insbesondere einer Sandbox, zum Modifizieren der Kommunikation mit der Datenschnittstelle (6, 7) verbunden sind, wobei mittels einer Updatefunktion, welche durch die Informationsbereitstellungseinrichtung (3) bereitgestellt wird, anwenderbezogene Konfigurationsund Betriebsdaten in die Modihziereinrichtung (1) eingespielt und/oder darin installiert werden, **dadurch gekennzeichnet, dass** ein Zugriff der Steuereinrichtung und/oder der Informationsbereitstellungseinrichtung auf die Modifiziereinrichtung oder auf durch die Modifiziereinrichtung erzeugte und/oder verwaltete Daten verhindert ist.

## Claims

1. Gateway (17) for conveying data packets, at least comprising a controller (2) for providing and/or controlling at least one basic functionality of the gateway (17), at least one data interface (6, 7) for exchanging data packets and at least one information provision device (3, 14) for providing control information of at least temporary relevance to cooperation between the controller (2) and the data interface (6, 7), the controller (2) and the information provision device (3, 14) being connected via at least a first and a second interface (4, 5) to at least one modifying device (1), in particular a sandbox, which is configurable by the user, user-related configuration and operating data being importable into and/or installable in the modifying device (1) by means of an update function, which can be provided by the information provision device (3), **characterised in that** access by the controller (2) and/or the information provision device (3, 14) to the modifying device (1) or to data (9, 10) generated and/or managed by the modifying device is prevented.

2. Gateway according to claim 1, **characterised in that** user-related functions are executable using the modifying device (1).

3. Gateway according to claim 2, **characterised in that** one user-related function is at least temporarily user-related control of the data interface (6, 7), user-related communication via the data interface (6, 7) with further devices and/or user-related communication with at least one data provision device (12, 13, 14, 15) of the information provision device (3).

4. Gateway according to claim 3, **characterised in that** at least one data provision device (12, 13, 14, 15) is a device selected from the group at least consisting of a configuration data provision device (12) for providing configuration data for the manufacturer functionality applied by the equipment manufacturer, an operating data provision device (13) for providing operating data for the manufacturer functionality applied by the equipment manufacturer, a functionality controller (14) for controlling the manufacturer functionality applied by the device manufacturer, a configuration device (15) having the configurations for the resource and rights settings for the modifying device (1) applied by the equipment manufacturer and/or combinations thereof.

5. Gateway according to any of claims 2 to 4, **characterised in that** data (9, 10) are storable in an access region of the modifying device (1) in order to execute user-related functions.

6. Gateway according to claim 5, **characterised in that** the data (9, 10) are user-related or function-related configuration data (9) and/or operating data (10).

7. Gateway according to any of the preceding claims, **characterised in that** an authentication function and/or a clearing function for authenticating and/or clearing the user-related configuration and/or operating data can be provided by the information provision device (3).

8. Gateway according to any of the preceding claims, **characterised in that** the modifying device (1) at least temporarily comprises at least one function means (11) for executing a user-related function, which is storable in an access region of the modifying device (1).

9. Gateway according to claim 8, **characterised in that** access by the controller (2) and/or the information provision device (3, 14) to the function means (11) is preventable.

10. Method for conveying data packets, at least one basic functionality of a gateway (17) being provided and/or controlled using a controller (2), data packets being exchanged using at least one data interface (6, 7) and at least temporarily relevant control information being provided for cooperation between the controller (2) and the data interface (6, 7) using at least one information provision device (3, 14), the controller (2) and the information provision device (3, 14) being connected via at least a first and a second interface (4, 5) to at least one modifying device (1), in particular a sandbox, which is configurable by the user, in order to modify communication with the data interface (6, 7), user-related configuration and operating data being importable into and/or installable in the modifying device (1) by means of an update function, which can be provided by the information provision device (3), **characterised in that** that access by the controller and/or the information provision device to the modifying device or to data generated and/or managed by the modifying device is prevented.

## Revendications

1. Passerelle (17) pour la transmission de paquets de données, comprenant au moins un dispositif de commande (2) pour la mise à disposition et/ou la commande d'au moins une fonctionnalité de base de la passerelle (17), au moins une interface de données (6, 7) pour l'échange des paquets de données et au moins un dispositif de fourniture d'informations (3, 14) pour la fourniture, au moins momentanée, d'informations de commande importantes pour une interaction du dispositif de commande (2) et de l'interface de données (6, 7), le dispositif de commande (2) et le dispositif de fourniture d'informations (3, 14) étant reliés, par l'intermédiaire d'au moins une première et une deuxième interface (4, 5), avec au moins un dispositif de modification (1) configurable par l'utilisateur, plus particulièrement un sablier, permettant de modifier la communication avec l'interface de données (6, 7), une fonction de mise à jour, qui peut être fournie par le dispositif de fourniture d'informations (3), permettant d'enregistrer et/ou d'installer, dans le dispositif de modification (1), des données de configuration et de fonctionnement, spécifiques aux utilisateurs, **caractérisée en ce qu'**un accès du dispositif de commande (2) et/ou du dispositif de fourniture d'informations (3, 14) au dispositif de modification (1) ou aux données (9, 10) générées et/ou gérées par le dispositif de modification est empêché.

2. Passerelle selon la revendication 1, **caractérisée en ce que** des fonctions spécifiques aux utilisateurs peuvent être exécutées avec le dispositif de modification (1).

3. Passerelle selon la revendication 2, **caractérisée en ce qu'**une fonction spécifique aux utilisateurs est, au moins momentanément, la commande spécifique aux utilisateurs de l'interface de données (6, 7), la communication spécifique aux utilisateurs par l'intermédiaire de l'interface de données (6, 7) avec d'autres dispositifs et/ou la communication spécifiques aux utilisateurs avec au moins un dispositif de fourniture de données (12, 13, 14, 15) du dispositif de fourniture d'informations (3).

4. Passerelle selon la revendication 3, **caractérisée en ce qu'**au moins un dispositif de fourniture de données (12, 13, 14, 15) est un dispositif sélectionné dans le groupe constitué au moins d'un dispositif de fourniture de données de configuration (12) pour la fourniture de données de configuration de la fonctionnalité du fabricant prévue par le fabricant des appareils, un dispositif de fourniture de données de fonctionnement (13) pour la fourniture de données de fonctionnement de la fonctionnalité du fabricant prévue par le fabricant des appareils, un dispositif de commande de fonctionnalité (14) pour la commande de la fonctionnalité du fabricant prévue par le fabricant des appareils, un dispositif de configuration (15) avec les configurations, prévues par le fabricant des appareils, des paramétrages des ressources et des droits pour le dispositif de modification (1) et/ou les combinaisons qui en découlent.

5. Passerelle selon l'une des revendications 2 à 4, **caractérisée en ce que**, pour l'exécution de fonctions spécifiques aux utilisateurs, des données (9, 10) peuvent être enregistrées dans une zone d'accès du dispositif de modification (1).

6. Passerelle selon la revendication 5, **caractérisée en ce que** les données (9, 10) sont des données de configuration (9) spécifiques aux utilisateurs ou spécifiques aux fonctions et/ou des données de fonctionnement (10).

7. Passerelle selon l'une des revendications précédentes, **caractérisée en ce qu'**une fonction d'authentification et/ou une fonction de déblocage peut être fournie pour l'authentification et/ou le déblocage des données de configuration et/ou de fonctionnement spécifiques aux utilisateurs par le dispositif de fourniture d'informations (3).

8. Passerelle selon l'une des revendications précédentes, **caractérisée en ce que** le dispositif de modification (1) comprend, au moins par intermittence, au moins un moyen de fonctionnement (11) pour l'exécution d'une fonction spécifique aux utilisateurs, qui peut être enregistrée dans une zone d'accès du dispositif de modification (1).

9. Passerelle selon la revendication 8, **caractérisée en ce qu'**un accès du dispositif de commande (2) et/ou du dispositif de fourniture d'informations (3, 14) au moyen de fonctionnement (11) peut être empêché.

10. Procédé de transmission de paquets de données, dans lequel au moins une fonctionnalité de base d'une passerelle (17) est fournie et/ou commandée avec un dispositif de commande (2), des paquets de données sont échangés avec au moins une interface de données (6, 7) et des informations de commande importantes peuvent être fournies, au moins par intermittence, avec au moins un dispositif de fourniture d'informations (3, 14) pour une interaction du dispositif de commande (2) et de l'interface de données (6, 7), le dispositif de commande (2) et le dispositif de fourniture d'informations (3, 14) sont reliés par l'intermédiaire d'au moins une première et une deuxième interface (4, 5) avec au moins un dispositif de modification (1) configurable par l'utilisateur, plus particulièrement un sablier, pour la modification de la communication avec l'interface de données (6, 7), une fonction de mise à jour, fournie par le dispositif de fourniture d'informations (3), permet d'enregistrer et/ou d'installer, dans le dispositif de modification (1), des données de configuration et de fonctionnement spécifiques aux utilisateurs, **caractérisé en ce qu'**un accès du dispositif de commande et/ou du dispositif de fourniture d'informations au dispositif de modification ou aux données générées et/ou gérées par le dispositif de modification est empêché.
